# EUROPEAN PATENT SPECIFICATION

(11) **EP 2 072 091 B1**
(45) Date of publication and mention of the grant of the patent: **01.02.2012**
(21) Application number: 08005414.1
(22) Date of filing: 22.03.2008
(51) Int. Cl.: A63B 24/00, B62M 25/08

(54) **Bicycle electronic apparatus**
Elektronisches Fahrradgerät
Appareil électronique de bicyclette

(30) Priority: 20.12.2007 IT MI20072407
(43) Date of publication of application: 24.06.2009
(73) Proprietor: CAMPAGNOLO S.r.l., 36100 Vicenza (VI) (IT)
(72) Inventor: Miglioranza, Federico, 36015 Schio - VI (IT)
(74) Representative: Riccardi, Elisa

(56) References cited:
- WO-A-01/00281
- WO-A-2007/075734
- DE-A1-102006 019 385
- DE-U1-202004 003 150

## Description

The present invention refers to a bicycle electronic apparatus.

Bicycle electronic apparatuses are known and can comprise various electronic and/or electromechanical devices that can be mounted on board a bicycle.

In the case of simple bicycle electronic apparatuses called cycle computers, a display unit can be mounted on the handlebars to display to the cyclist various travel parameters, or journey data, detected by suitable sensors and possibly suitably processed, such as the travel time, the travelled distances, the current, average and maximum speed, the toothed crown or the sprocket currently engaged by the chain or the gear ratio etc. The cyclist can normally select and read the data of interest on the display during riding. Moreover, one or more values of some of said travel data, for example the totals or the minimum and maximum values, are typically stored in a non-volatile memory of the cycle computer for later consultation, even with the bicycle still.

When the display unit is removably mountable on a support fixed to the handlebars, the cyclist can therefore consult the travel data as desired even far from the bicycle.

Some known removable cycle computers provide for the capability of a connection for the transmission of the data towards a data receiving station, like a computer, where the data can be read by the cyclist to evaluate his/her own performance. The use of suitable software programs allows such data to be processed for them to be better interpreted and/or displayed on the computer.

In the case of known cycle computers, the connection with the computer provides for the use of an infrared transmission, or an ultrasound transmission or even a magnetic transmission. To this purpose, the display unit, once removed from the bicycle, is arranged in the proximity of the computer near to a data receiving peripheral thereof. Once the computer has detected the presence of the display unit, the data transfer can begin according to known protocols.

WO 01/00281 A2 discloses a performance monitoring system comprising a player-mounted device that can be mounted on a bicycle and has a processor, a non-volatile data memory, and an interface port that may include a USB port, for data exchange with a field-positioned device.

D2 (WO 2007/075734 A2) discloses a system wherein data of each of a plurality of users is stored in a portable data storage device associated with each user.

A more complex bicycle electronic apparatus, for example as described in EP 1 500 582 A1 to the same Applicant, can also comprise electromechanical (front and rear) derailleurs controlled through suitable switches arranged on the control devices connected to the handlebars. Alternatively or in addition thereto, the derailleurs can be automatically controlled by the bicycle electronic apparatus, based upon a logic evaluation of the travel conditions. Moreover, a bicycle electronic apparatus according to the preamble of claim 1 is disclosed in DE 10 2006 019 385 A1.

Also in the case of such bicycle electronic apparatuses also intended for the management of the gearshift of the bicycle, a display unit analogous to the above described cycle computer is provided, where it is possible to select and consult the above described travel data and data relative to the status of the apparatus itself such as the status of a power supply battery, and through which adjustments of various parameters of the apparatus can also be performed, for example the logic positions of the derailleurs corresponding to the engagement of the toothed wheels. Also in this case, the cyclist can gain access to the travel data, apparatus status data, and diagnostics data both when riding and when still, and even far away from the bicycle in the case of a removable display unit.

In the bicycle electronic apparatus described in Italian patent application MI2007A001181 to the same Applicant, still secret at the date of first filing of the present application, the various units of which the apparatus consists are suitably connected to each other through a communication channel through which the data is exchanged according to suitable communication protocols, like for example a half duplex asynchronous serial communication.

A drawback of known bicycle electronic apparatuses consists in that for data transmission it is essential for a computer to be present. In the case of need for immediate transfer, for example in case the memory of the display unit is full, the cyclist shall in any case have to wait until he/she returns home before being able to download the data, losing the new acquisitions due to full memory, or else he/she will have to delete the oldest data to allow the storage of new data.

Another drawback of known bicycle electronic apparatuses consists in that the transmission from the display unit to the computer can be slow.

A further drawback consists in that the transmission from the display unit to the computer can be not secure with a loss of data during transmission or with the need to repeat the transmission operation to recover such data and thus further slowing down transmission.

Another drawback of known bicycle electronic apparatuses consists in that the transmission from the display unit to the computer can only take place with the bicycle still, since the display unit must be removed from the bicycle and taken at the computer.

The technical problem at the basis of the present invention is to provide a bicycle electronic apparatus that allows fast and secure data transmission, possibly even during. travel without necessitating the physical vicinity of a computer or similar device.

The invention concerns a bicycle electronic apparatus according to claim 1.

By providing a port for a removable mass storage, the cyclist can easily proceed to the data transfer from the non-volatile data memory to such a removable mass storage device and vice-versa at any time, even during travel, without the need to disconnect the display unit. By using a physical connection, the data transfer is also fast and secure. By providing for a data transfer managing controller, implementation is easied into existing bicycle devices, and the device can be made in two parts.

Preferably, said port is a flash memory port.

More preferably, said port is a USB port.

Such a USB port can advantageously be used, as well as for a USB memory key, an extremely portable device, also for the connection of a computer or a battery charger, as well as mouses, keyboards, hard disc mass storages, image scanners, digital cameras, printers, speaker systems, microphones and more.

Alternatively, said port is a port for a memory card, such as a port for MiniSD or MicroSD, CompactFlash, SmartMedia, MultiMediaCard, Memory Stick, Secure Digital, xD-Picture memory.

Preferably, a buffer memory is associated with said further controller, for the temporary storage of the data exchanged between said at least one non-volatile data memory and said removable mass storage.

More preferably, said at least one controller and said further controller communicate through a half duplex asynchronous serial communication protocol.

Even more preferably, said at least one controller and said further controller communicate through a communication channel with two signal lines.

Alternatively, the communication can be a radio transmission (wireless).

Preferably, moreover, said port comprises a connector having power supply terminals, which can advantageously be exploited for supplying power to low-power devices.

Preferably, moreover, said further controller and said port are part of an interface unit removably connectable in said electronic apparatus for a bicycle.

In this way, the cyclist can decide to lighten the bicycle removing the interface unit when he/she is certain that data transfer is not needed.

Preferably, the interface unit futher comprises a power supply device for its components and/or the connector.

By providing for a self-powered interface unit the presence of terminals under tension in the removable connector associated therewith in the remaining part of the bicycle electronic apparatus is avoided.

Preferably, the power supply device comprises an ON/OFF switch, which allows the interface unit to only be powered when necessary.

The ON/OFF switch can be manually actuated or automatically actuated when the interface is connected, for example a magnetically actuated switch.

More preferably, said interface unit comprises a second connector removably couplable with a matching connector, said matching connector being connected to a communication channel of said apparatus with the interposition of an insulation device, said insulation device being driveable by said power supply device of the interface unit.

Preferably, said insulation device comprises a number of insulation switches equal to the number of communication lines of the communication channel.

The switches preferably consist of MOSFET, but they could, for example, consist of transistors or relays. The switches could also be switches actuated automatically when the interface unit is connected, for example magnetically actuated switches.

Even more preferably, said matching connector is housed in a casing containing a display unit of the apparatus.

Alternatively, said matching connector is housed in a casing containing a drive unit of a gearshift of the apparatus.

Further features and advantages of the invention shall become clearer from the description of a preferred embodiment thereof, made with reference to the attached drawings, wherein:
- FIG. 1 shows a block diagram of a bicycle electronic apparatus according to a first embodiment of the invention and a device equipped with a USB interface associated therewith;
- FIG. 2 schematically shows an insulation device of the apparatus of FIG. 1;
- FIG. 3 shows a block diagram relative to the logic operation of an interface unit of the apparatus of FIG. 1;
- FIGs. 4 and 5 schematically show data packets exchanged between the components of the apparatus of FIG. 1;
- FIG. 6 shows an alternative block diagram relative to the logic operation of the interface unit of the apparatus of FIG. 1;
- FIG. 7 shows a data structure that can be used in the apparatus of FIG. 1;
- FIG. 8 shows a block diagram of a bicycle electronic apparatus according to another embodiment of the invention and a device equipped with a USB interface associated therewith; and
- FIG. 9 shows a block diagram of a bicycle electronic apparatus according to another embodiment of the invention and a device equipped with a USB interface associated therewith.

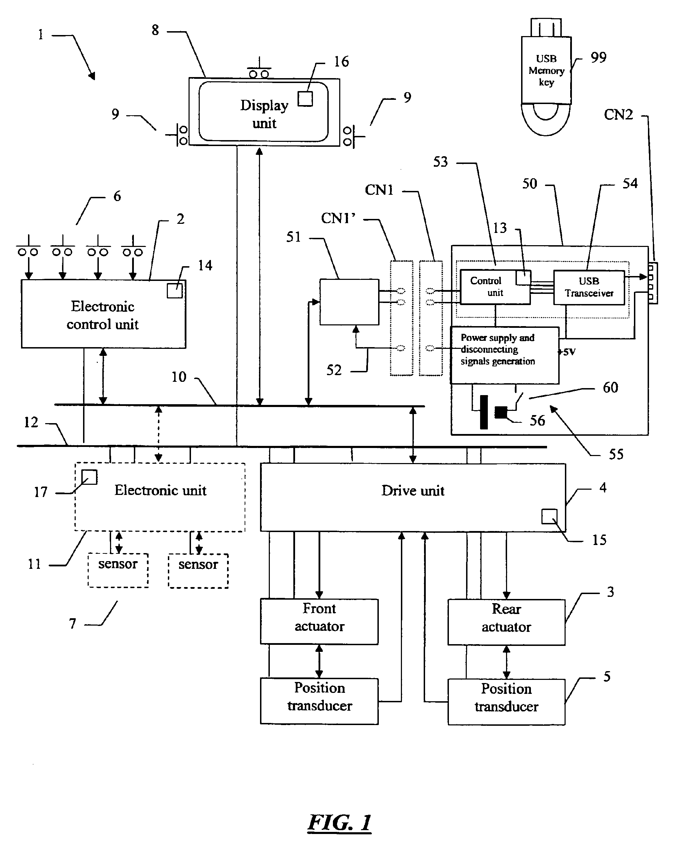

With reference to FIG. 1, a bicycle electronic apparatus 1 according to a first embodiment of the invention comprises an electronic control unit 2, at least one actuator 3 associated with a chain guide element or derailleur intended to move a motion transmitting chain among toothed wheels associated with the axle of the pedal cranks and/or with the hub of the rear wheel of the bicycle, and a drive unit 4 for the actuator(s) 3.

The bicycle electronic apparatus 1 preferably further comprises at least one position transducer 5 suitable for detecting the position of the actuator 3 and thus indirectly of the derailleur, or for directly detecting the position of the derailleur, to cooperate with the drive unit 4 and/or with the actuator 3 itself in the movement of the derailleur.

In the bicycle electronic apparatus 1, a plurality of switches 6 of the normally open type actuated by the cyclist through levers or buttons to input manual gearshifting requests and/or one or more sensors 7 of travel parameters, such as the travel speed, the speed of rotation of the cranks, the slope of the terrain, the heart rate of the cyclist and similar, are associated with the electronic control unit 2. The sensors 7, where provided for, are preferably under the control of a second electronic control unit 11, which can provide for pre-processing their outputs.

The bicycle electronic apparatus 1 further comprises a display unit 8 to provide information to the cyclist, to which preferably further switches 9 are associated, actuated by the cyclist through buttons or a multi-direction switch (joystick) to select the type of data to be displayed and/or to input other parameters and/or commands, preferably by selecting areas of the display of the display unit 8 in the way of a graphical user interface.

The electronic control unit 2 is preferably positioned near to the control members that can be actuated by the cyclist, namely in the proximity of the handlebars, in particular it can be housed in the casing of the display unit 8 fixed to the centre of the handlebars.

The drive unit 4 is preferably positioned in the proximity of the actuators 3, for example in the proximity of a bottle-holder of the bicycle.

The electronic control unit 2, the display unit 8, the drive unit 4 and the second electronic control unit or sensor unit 11 communicate through a communication channel 10 through a suitable communication protocol.

The communication is preferably via cable, but alternatively the communication can be a radio transmission (wireless).

FIG. 1 also schematically shows a power supply line 12 of the components of the bicycle electronic apparatus 1 while power supply sources are not shown. The bicycle electronic apparatus 1 can comprise one or more power supply sources, typically in the form of rechargeable batteries, and preferably comprises a first power supply source placed in a casing containing the electronic control unit 2 and a second power supply source placed in a casing containing or removably supporting the display unit 8.

The bicycle electronic apparatus 1 according to the invention further comprises a removable interface unit 50.

The interface unit 50 can be connected through a first connector CN1 thereof to a respective connector CN1' associated with the remaining part of the electronic apparatus 1 in a suitable physical point of the communication channel 10, for example in the proximity of the display unit 8 and thus close to the handlebars, or in the proximity of the drive unit 4 and thus in the area of the bottle-holder.

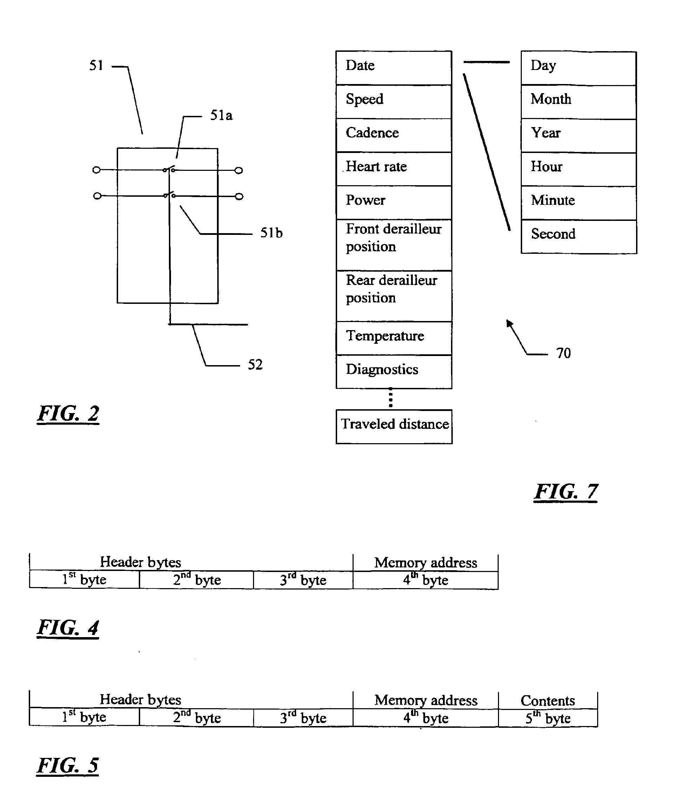

Between the communication channel 10 and the connector CN1' a drivable insulation device 51 is arranged. The drivable insulation device 51, shown in greater detail in FIG. 2, comprises a number - two in the illustrated case - of insulation switches 51a, 51b equal to the number of communication lines of the communication channel 10 and drivable by a control signal 52 received along a line 52 from the interface unit 50 when connected.

The switches 51a and 51b of the insulation device 51 are of the normally open type and therefore, when the interface unit 50 is not connected, allow the electrical insulation of the terminals of the connector CN1'. The switches 51a, 51b preferably consist of MOSFETs, but they could, for example, consist of transistors or relays. The switches 51a, 51b could also be switches automatically actuated when the interface unit 50 is connected to the connector CN1', for example magnetically actuated switches associated with one or more magnets in the connector CN1.

The interface unit 50 comprises, in addition to the connector CN1 for connection to the communication channel 10, a USB port, comprising a transceiver 54 and a connector CN2, for the connection to an electronic device 99 equipped with a USB interface, for example to a USB memory key 99. The interface unit 50 further comprises a control unit 53 of the communication between the USB port 54, CN2 and the communication channel 10.

The connector CN2 can be one of the known USB types, like for example type A, type B, mini-A, mini-B and micro type.

The control unit 53 and the USB transceiver 54 are preferably integrated in a micro-controller (indicated with a broken line in FIG. 1), for example consisting of the integrated circuit PIC18F87J50 by MICROCHIP TECHNOLOGY INC., Arizona, U.S.A.

The interface unit 50 further comprises a power supply and disconnecting device 55, comprising a battery power supply source 56 and preferably an ON/OFF switch 60.

The switch 60 allows the interface unit 50 to only be powered when strictly necessary, i.e. when it is connected to the connector CN1'. Such a switch 60 can be manually actuated or automatically actuated when the interface is connected to the connector CN1', for example a magnetically actuated switch associated with a magnet in the connector CN1'.

The power supply and disconnecting device 55 provides a suitable power supply voltage to the control unit 53, to the transceiver 54 and to the terminals of the connector CN2 for powering the USB device 99 in case this is a passive device, like in the case of a USB memory key. Typically, the voltage supplied to the terminals of the connector CN2 is +5V.

The power supply and disconnecting device 55 also provides the control signal on the line 52 for the insulation device 51, namely a signal for closing the switches 51a and 51b.

The control unit 53 of the interface unit 50 takes care of managing the communication on the channel 10 with the remaining components of the bicycle electronic apparatus 1 and of managing the communication with the USB device 99, by opening and closing a communication channel with the USB device 99 through the USB transceiver 54.

In case the USB device 99 is a USB memory key, the control unit 53 more specifically takes care of generating and sending over the communication channel 10 - according to the ways better described hereafter - requests for data of interest, of receiving the requested data from the communication channel 10, and of sending them to the USB memory key 99, possibly with prior temporary storage in a buffer memory 13 thereof.

The communication over the channel 10 among the various components of the bicycle electronic apparatus 1, including the interface unit 50, preferably takes place according to the following half duplex asynchronous serial communication protocol.

The communication channel 10 comprises two common signal lines "Tx/Rx" and "WU", to which the various controllers of the bicycle electronic apparatus 1 are connected, namely the electronic control unit 2, the display unit 8 - when connected in case it is removable -, the drive unit 4, the second electronic control unit or sensor unit 11 if present, and the control unit 53 of the interface 50 when connected.

The signal line Tx/Rx is a transmission/receiving line for a two-way data transmission among the various components 2, 4, 8, 11, 53, while the signal line WU is a two-values status line used for the communication protocol. For example, the logic value "0" of the status line WU indicates that the transmission line Tx/Rx is busy and the logic value "1" of the status line WU indicates that the transmission line Tx/Rx is available for a communication process.

When one of the units 2, 4, 8, 11, 53, or sender, has something to transmit to another of the units 2, 4, 8, 11, 53, or receiver, it checks whether the transmission line Tx/Rx is busy or available by reading the value of the status line WU. If the value of the line WU indicates that the transmission line Tx/Rx is busy (WU=0), the sender waits until the value of the line WU indicates that the line Tx/Rx has become available (WU=1). As soon as the transmission line Tx/Rx is available, the sender switches the status of the status line WU, taking it to "0" to occupy the communication network.

The sender then transmits a packet of serial data over the transmission line Tx/Rx.

Each data packet comprises one or more header bytes depending upon the used communication protocol, and one or more data bytes.

There can also be transmission control data, for example parity check or check-sum bits.

The header bytes comprise the indication of the instructions that must be carried out by the receiver, such information being defined in terms of a code that also encodes the receiver itself, as well as the address of the sender.

The data bytes depend, in length, structure and content, upon which unit 2, 4, 8, 11, 53 is the sender, upon which unit 2, 4, 8, 11, 53 is the receiver, and upon the type of information that is transmitted.

When the status line WU is taken to "0" by the sender, the network connected units 2, 4, 8, 11, 53 begin to read the packet of serial data sent by the sender along the transmission line Tx/Rx. The unit 2, 4, 8, 11, 53 that recognises to be the receiver of the transmission, through the decoding of the header byte(s) of the data packet, becomes the receiver and can reply by transmitting over the transmission line Tx/Rx a packet of serial data indicative of an acknowledgement of receipt intended for the current sender. The other network connected units 2, 4, 8, 11, 53, except for the sender and the receiver, are not involved in the transmission process and can perform other activities.

At the end of the transmission from the receiver to the sender, the sender takes the status line WU to "1" thus releasing the communication network 10. In case none of the network connected units 2, 4, 8, 11, 53 connected in the network replies to the sender, for example in the case of malfunction of the receiver, the sender releases the network after a predetermined time out, taking the status line WU to "1".

The described half duplex asynchronous serial communication is a "random access multi-master communication system", where the exclusive use of the network is carried out by the first "sender" unit 2, 4, 8, 11, 53 that requests the network.

If many units 2, 4, 8, 11, 53 simultaneously request the use of the network, the exclusive use of the network is hierarchically established through a priority defined by the firmware of the various units 2, 4, 8, 11, 53.

This occurs, for example, when two or more units 2, 4, 8, 11, 53 have something to transmit while the network is busy (status line WU="0") so that they must wait until the network becomes available again. At the moment when the network becomes available again (the status line WU is taken to "1"), the two or more units are all ready to occupy the network, and only the unit highest up in the hierarchy becomes the sender.

Through the interface unit 50, the bicycle electronic apparatus 1 is able to communicate with a device 99 equipped with a USB interface connected to the connector CN2 of the USB port 54, CN2.

The interface unit 50 is firstly connected through its connector CN1 to the connector CN1'. The power supply and disconnecting device 55 generates the control signal 52 for the insulation device 51 causing the switches 51a and 51b to close and therefore the connection of the interface unit 50, in particular of its control unit 53, to the communication channel 10.

At this point the cyclist can connect the device 99 equipped with a USB interface to the connector CN2 of the interface 50.

The device 99 can also be first connected to the interface 50 through the connector CN2, and then the assembly consisting of the interface 50 and the USB device 99 can be connected to the connector CN1'.

In a preferred embodiment, the device 99 is a USB memory key, used to download various travel data, apparatus status data, diagnostics data, configuration data, etc. recorded during the use of the bicycle, for example: the outputs of the sensors 7 such as the travel speed, the speed of rotation of the pedal cranks, the slope of the terrain, the heart rate of the cyclist, etc., collected by the second electronic unit 11; the positions of the derailleurs over time, alignment parameters of the actuators with respect to the toothed wheels, parameters of the logic for evaluating the travel conditions etc., collected by the drive unit 4; the moments when the manual commands were entered through the switches 6, collected by the electronic control unit 2; the display preferences and other settings collected by the display unit 8 etc. All of the aforementioned various data can be stored in non-volatile data memories, 14, 15, 16, 17, respectively, of the individual components 2, 4, 8, 11, or they can be stored as a whole in the display unit 8 or in the drive unit 4.

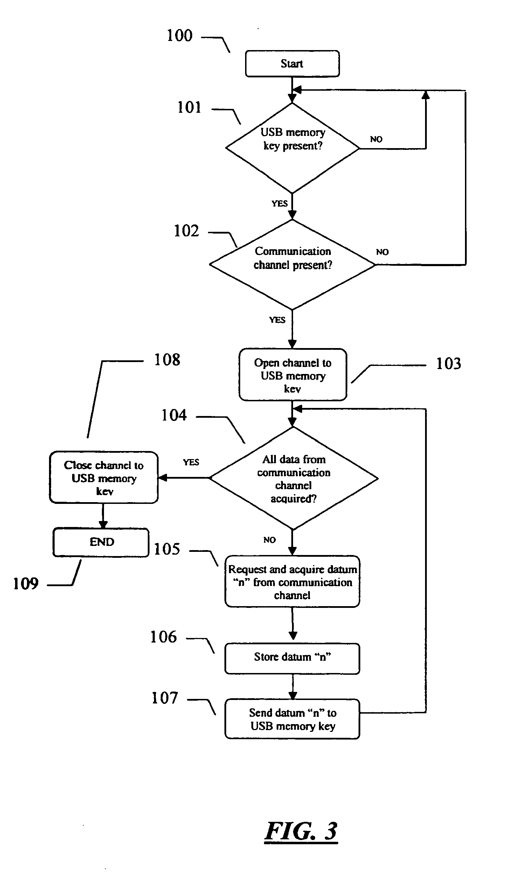

The logic operation of the interface unit 50 and in particular of the control unit 53 is described with reference to the block diagram of FIG. 3.

The start of operation (block 100) represents the switching on of the interface 50 through the ON/OFF switch 60. In a block 101 cyclically carried out until a positive outcome, the control unit 53 checks whether the USB memory key 99 is connected to the connector CN2. Such a detection can, for example, be carried out through a software query through the USB transceiver 54.

If the USB memory key 99 is present, in a subsequent block 102 the control unit 53 checks the actual connection to the communication channel 10, for example through sending a presence request data packet to one of the other units 2, 4, 8 and 11 and receiving a reply data packet. If the communication channel 10 is not present, for example because the interface unit 50 is not connected to the connector CN1', the execution returns to block 101.

If, on the other hand, the communication channel 10 is present, in a subsequent block 103 the control unit 53, through the USB transceiver 54, takes care of opening the communication channel towards the USB memory key, preferably according to what is defined by the standard protocol called USB Mass Storage protocol.

A data acquisition cycle is then carried out. In a block 104, the control unit 53 checks whether all data has been acquired by one or more of the components 2, 4, 8, 11 of the bicycle electronic apparatus 1 connected to the communication channel 10, in particular the data or a part of the data stored in one of the non-volatile data memories 14-17. At the first execution of such a block 104, the check is certainly negative since the USB memory key 99 and the interface unit 50 have just been connected and there has not yet been any data acquisition. In the subsequent block 105, the control unit 53 therefore carries out a request and acquisition of a datum through the communication channel 10. The acquired datum is preferably stored in an area of the buffer memory 13 of the interface 50 (block 106), and then sent to the USB memory key 99 (block 107) through the transceiver 54 and the connector CN2. The execution then returns to block 104 of checking whether all data has been requested. If such a check is negative, blocks 105, 106 and 107 are again carried out for the acquisition and transmission to the USB memory key 99 of the subsequent datum. If, on the other hand, the check of block 104 is positive, namely if all data has been acquired, the execution moves on to a block 108 in which, through the transceiver 54, the communication channel 10 towards the USB memory key 99 is closed, preferably according to said *USB Mass Storage* protocol and the execution ends (block 109).

Simultaneously with the above indicated operations, the display unit 8 can display the advancing of the various steps of the transfer, for example with indications of the type "USB memory key present", "Start data transfer", "End data transfer", "% data transferred" or indication of anomalies.

Moreover, once the travel, status of the apparatus, diagnostics, configuration data, etc., have been sent to the interface unit 50 for transferral into the USB memory key 99, the display unit 8 or other component 2, 4, 11 where these had been stored can proceed to delete them. Deletion can take place automatically or, preferably, the control unit 53, after the USB communication channel has been closed in block 108, shall take care of sending a suitable data deletion instruction through the communication channel 10. Deletion can in any case be subordinated to a manual command imparted by the cyclist.

The request and acquisition of a datum of interest "n" from the communication channel 10 of block 105 can be managed by the control unit 53 of the interface 50 on the two lines Tx/Rx and WU according to the above described protocol.

For example, the control unit 53 can request a datum from one of the components 2, 4, 8, 11, for example the display unit 8, by sending over the communication channel 10 a request data packet, schematically represented in FIG. 4. The request data packet comprises, in the headers bytes, in code form, the indication of who is the receiver, the display unit 8 in the example, and the indication for the receiver itself of the particular type of datum of interest to be transmitted in reply. The type of datum of interest is preferably indicated in one or more data byte(s) (4th byte of the reply data packet, for example) directly through its address in the internal memory 14-17 of the receiver, the address in the memory 16 of the display unit 8 in this example.

In reply, the receiver, the display unit 8 in the example, sends over the communication channel 10 a data packet, schematically represented in FIG. 5. The reply data packet comprises, in the headers bytes, the indication that the receiver is the control unit 53 of the interface unit 50 and, in the data bytes, the value of the requested datum (5th data byte), preferably together with the repetition (in the 4th data byte) of its address in the internal memory 14-17 of the component 2, 4, 8, 11 involved, the address in the memory 16 of the display unit 8 in the example.

In the USB memory key 99, in the block 107 of FIG. 3, it is possible to store only the value of the datum, or also the address in the internal memory 14-17 of the component 2, 4, 8, 11 involved. The second way is preferred in case storage on USB memory key is for backup purposes and therefore the capability of restoring thereof in the component 2, 4, 8, 11 is provided.

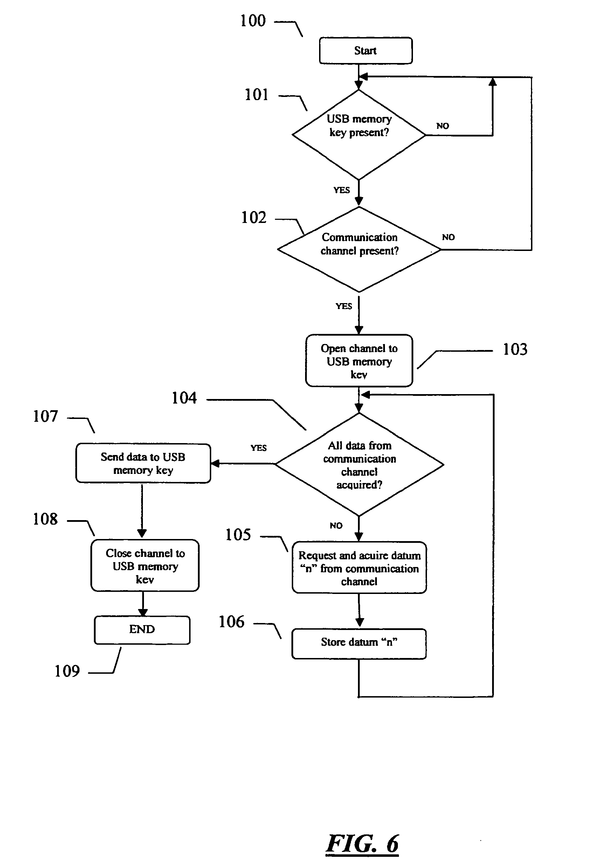

FIG. 6 represents a variant of operation, which differs from the one described with reference to FIG. 3 in that the n-th datum is not transmitted to the USB memory key 99 immediately after it has been acquired and stored (blocks 105, 106 and 107), rather all data of interest are firstly acquired and stored in the memory 13 of the interface unit 50, through the cyclical execution of blocks 104, 105 and 106, and then transferred in a single transmission towards the USB memory key 99 in block 107.

The data downloaded in the USB memory key 99 according to the block diagram of FIG. 3 or of FIG. 6 can subsequently be downloaded into a remote computer in order to carry out a diagnostic of the bicycle electronic apparatus 1, to evaluate the performance of the cyclist for the purposes of his/her training through a suitable application program, etc.

In a preferred embodiment, the data transfer from the bicycle electronic apparatus 1 to the USB memory key 99 takes place fully for all data contained in a selected part of the memory 16 of the display unit 8 - or of the memory 14, 15, 17 of another of the components 2, 4, 11 - , without taking into account the structure of the data itself. The correct interpretation of the mass of data is left to the application program. In other words, the transferred data have a meaning for the display unit 8, are meaningless for the interface unit 50 and for the USB memory key 99, and have a meaning for the application program onto computer.

An example structure of the travel data, apparatus status data, diagnostics data, configuration data, etc. stored as a whole in the display unit 8 and transferred to the USB memory key 99 in the way outlined above is represented in FIG. 7. Each recording corresponds to a record 70 containing: a date field, which preferably comprises day, month, year, hour, minute and second subfields, in which the moment of data acquisition by the respective sensors or transducers is stored, as well as one or more fields intended for the value at such a moment of the speed, cadence, heart rate, power, position of the front derailleur, position of the rear derailleur, temperature, diagnostic values, distance travelled etc.

In an alternative that can be preferable when the storage of the travel data, apparatus status data, diagnostics data, configuration data, etc. is distributed among the components 2, 4, 8, 11 of the bicycle electronic apparatus, the data structure can, for each recording, provide for the date field having the aforementioned format, a field encoding the type of datum, and a value relative to the datum.

The USB memory key 99 can also be used to download into the bicycle electronic apparatus 1 the values of various configuration parameters of the bicycle electronic apparatus, such as - only by way of an example - parameters of the logic for evaluating the travel conditions used by the drive unit 4 for managing the gearshift and preferred settings of the display unit 8.

Still alternatively, the device 99 equipped with a USB interface connectable to the interface unit 50 can be a computer, to directly take care of downloading the travel data, apparatus status data, diagnostics data, configuration data, etc. or of configuring the bicycle electronic apparatus 1.

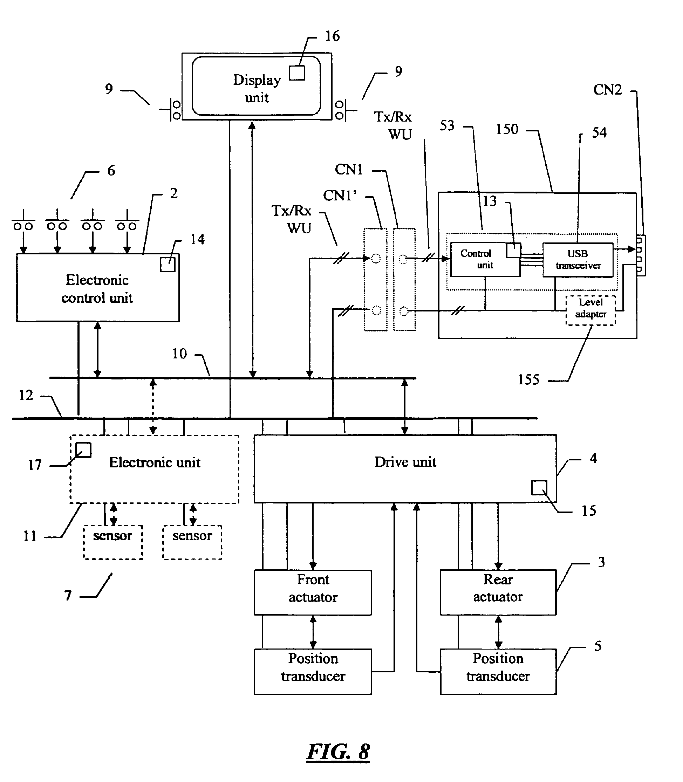

The USB connector CN2, as well as - in the case of the embodiment of FIG. 8 - the connector CN1', can advantageously be further usable for the connection of a battery charger, possibly also for recharging the battery(ies) for supplying power to the other components of the bicycle electronic apparatus 1.

Furthermore, the USB connector CN2 can also be used for the connection of mouses, keyboards, hard disc mass storage, image scanners, digital cameras, printers, speaker systems, microphones and more.

FIG. 8 represents a bicycle electronic apparatus 1 according to another embodiment of the invention, which differs from that of FIG. 1 in that it does not have the insulation device 51 upstream of the connector CN1', and in that the interface unit, indicated here with reference numeral 150, does not have the power supply and disconnecting device 55.

According to this embodiment, the connector CN1' has terminals leading to the communication channel 10 and to the power supply line 12 of the bicycle electronic apparatus 1. The connector CN1 has corresponding terminals to take the signal lines "Tx/Rx" and "WU" of the communication channel 10 to the control unit 53 and the power supply lines to the control unit 53, to the USB transceiver 54 and to the terminals of the USB connector CN2. There can be an optional block 155 inside the interface unit 150 to adapt, if necessary, the voltage values of the power supply lines 12 of the bicycle electronic apparatus 1 to the standard power supply values for devices equipped with USB interface, +5V in the case of the USB memory key 99.

The use and operation of such an embodiment is substantially the same as what has been previously described, wherein the data transfer procedure according to FIG. 3 or FIG. 6 can begin (block 100) as soon as the interface unit 150, possibly already provided with a USB memory key 99, is connected to the connector CN1' and thus powered by the power supply line 12 of the bicycle electronic apparatus 1.

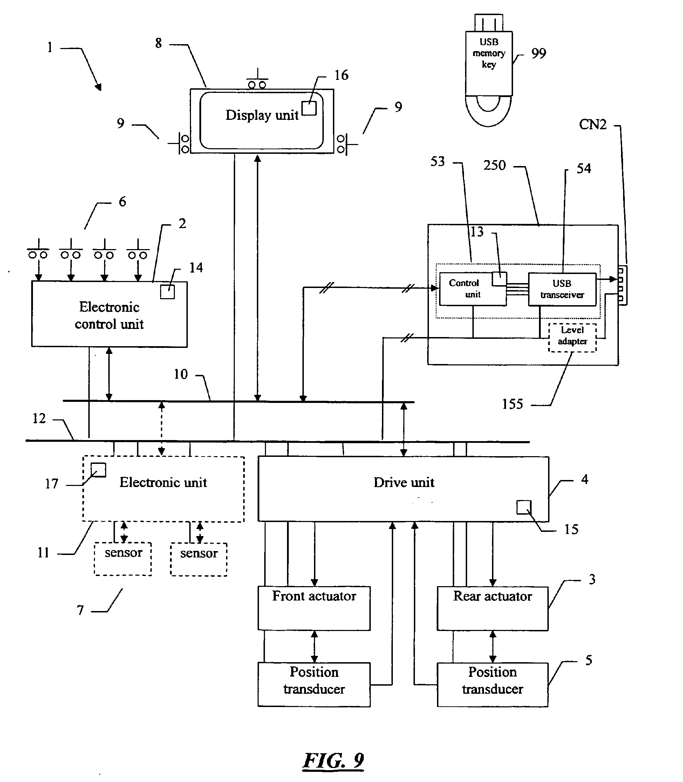

FIG. 9 represents a bicycle electronic apparatus 1 according to another embodiment of the invention, which differs from that of FIG. 8 in that the interface unit, indicated here with reference numeral 250, is not removable through connectors, rather it is integrated and therefore permanently connected to the communication channel 10 and to the power supply line 12 of the bicycle electronic apparatus 1.

In the embodiment of FIG. 1, as an alternative to the insulation device 51, as well as in the embodiment of FIG. 8, there could be other insulation means for the connector CN1', such as a removable cover made of an electrically insulating material, preferably tin.

According to the embodiments of FIGs. 1 and 8, in the case of communication through radio transmission (wireless), the interface unit 50 or 150, and in particular its control unit 53, shall be provided with a radio transmitter/receiver and, in the embodiment of FIG. 1, the insulation device 51 shall be omitted.

As an alternative to the half duplex asynchronous serial communication described above, among the components 2, 4, 8, 11, 53 a duplex serial, synchronous serial, parallel communication could be established.

Moreover, not all of the controllers 2, 4, 8, 11 of the bicycle electronic apparatus 1 are necessarily present. For example, in the case of a mechanical gearshift, the electronic control unit 2 and the drive unit 4, as well as the actuators 3 and the transducers 5, are absent. In this case, moreover, the sensors 7 could lead directly to the display unit 8 (in this case also known as cycle computer) and therefore the communication channel 10 and the communication protocol could be replaced by a dedicated communication line between the display unit 8 and the interface unit 50, 150, 250.

Similarly, in the case of a totally automatic gearshift, the electronic control unit 2 shall be absent and the display unit 8 could also be absent. Also in this case, the formation of a network through the communication channel 10 and the communication protocol may be superfluous, a dedicated communication line between the interface unit 50, 150, 250 and the drive unit, to which possible sensors 7 lead, being sufficient.

Alternatively or in addition to the port 54, CN2 for a device equipped with a USB interface, the bicycle electronic apparatus 1 and in particular its interface unit 50, 150, 250 could be equipped with a port for other types of memory card, such as a port for MiniSD or MicroSD, CompactFlash, SmartMedia, MultiMediaCard, Memory Stick, Secure Digital, xD-Picture memory, which could simply consist of a connector, in other words without providing for a transceiver.

More generally, the bicycle electronic apparatus 1 and in particular its interface unit 50, 150, 250 could be equipped with a port for other types of flash memory or even more generally for other types of removable mass storage.

## Claims

1. Bicycle electronic apparatus (1) comprising at least one non-volatile data memory (14-17), at least one controller (2, 4, 8, 11) for accessing said at least one non-volatile data memory (14-17), a port (54, CN2) for a removable mass storage device (99), and **characterised in that** said apparatus (1) comprises a further controller (53) for managing the data transfer between said at least one controller (2, 4, 8, 11) and said port (54, CN2).

2. Bicycle electronic apparatus (1) according to claim 1, wherein said port (54, CN2) is a port for a flash memory (99).

3. Bicycle electronic apparatus (1) according to claim 2, wherein said port (54, CN2) is a USB port.

4. Bicycle electronic apparatus (1) according to claim 2, wherein said port is a port for a memory card.

5. Bicycle electronic apparatus (1) according to any of the preceding claims, comprising a buffer memory (13) associated with said further controller (53).

6. Bicycle electronic apparatus (1) according to any of the preceding claims, wherein said at least one controller (2, 4, 8, 11) and said further controller (53) communicate through a half duplex asynchronous serial communication protocol.

7. Bicycle electronic apparatus (1) according to any of the preceding claims, wherein said at least one controller (2, 4, 8, 11) and said further controller (53) communicate through a communication channel (10) with two signal lines.

8. Bicycle electronic apparatus (1) according to any of the preceding claims, wherein said port (54, CN2) comprises a connector (CN2) having power supply terminals.

9. Bicycle electronic apparatus (1) according to any of the preceding claims, wherein said further controller (53) and said port (54, CN2) are part of an interface unit (50, 150) removably connectable (CN1, CN1') in said bicycle electronic apparatus (1).

10. Bicycle electronic apparatus (1) according to claim 9, wherein the interface unit (50) further comprises a power supply device (55) for its components (53, 54) and/or the connector (CN2).

11. Bicycle electronic apparatus (1) according to claim 10, wherein the power supply device (55) comprises an ON/OFF switch (60).

12. Bicycle electronic apparatus (1) according to any of claims 10-11, wherein said interface unit (50) comprises a second connector (CN1) removably couplable with a matching connector (CN1'), said matching connector (CN1') being connected to a communication channel (10) of said apparatus (1) with the interposition of an insulation device (52), said insulation device (52) being drivable by said power supply device (55) of the interface unit (50).

13. Bicycle electronic apparatus (1) according to claim 12, wherein said insulation device (52) comprises a number of insulation switches (51a, 51b) equal to the number of communication lines of the communication channel (10).

14. Bicycle electronic apparatus (1) according to any of claims 12-13, wherein said matching connector (CN1') is housed in a casing containing a display unit (8) of the apparatus (1).

15. Bicycle electronic apparatus (1) according to any of claims 12-13, wherein said matching connector (CN1') is housed in a casing containing a control unit (4) of a gearshift of the apparatus (1).

## Patentansprüche

1. Elektronisches Fahrradgerät (1), enthaltend wenigstens einen nicht flüchtigen Datenspeicher (14-17), wenigstens eine Steuereinheit (2, 4, 8, 11) für den Zugriff auf den wenigstens einen nicht flüchtigen Datenspeicher (14-17) und einen Anachluss (54, CN2) für eine lösbare Massenspeichervorrichtung (99) und **dadurch gekennzeichnet, dass** das Gerät (1) eine weitere Steuereinheit (53) zum Verwalten des Datentransfers zwischen der wenigstens einen Steuereinheit (2, 4, 8, 11) und dem Anschluss (54, CN2) enthält.

2. Elektronisches Fahrradgerät (1) nach Anspruch 1, bei dem der Anschluss (54, CN2) ein Anschluss für einen Flash-Speicher (99) ist.

3. Elektronisches Fahrradgerät (1) nach Anspruch 2, bei dem der Anschluss (54, CN2) ein USB-Anschluss ist.

4. Elektronisches Fahrradgerät (1) nach Anspruch 2, bei dem der Anschluss ein Anschluss für eine Speicherkarte ist.

5. Elektronisches Fahrradgerät (1) nach einem der vorhergehenden Ansprüche, enthaltend einen Pufferspeicher (13), der der weiteren Steuereinheit (53) zugeordnet ist.

6. Elektronisches Fahrradgerät (1) nach einem der vorhergehenden Ansprüche, bei dem die wenigstens eine Steuereinheit (2, 4, 8, 11) und die weitere Steuereinheit (53) über ein asynchrones serielles Halbduplex-Kommunikationsprotokoll kommunizieren.

7. Elektronisches Fahrradgerät (1) nach einem der vorhergehenden Ansprüche, bei dem die wenigstens eine Steuereinheit (2, 4, 8, 11) und die weitere Steuereinheit (53) über einen Kommunikationskanal (10) mit zwei Signalleitungen kommunizieren.

8. Elektronisches Fahrradgerät (1) nach einem der vorhergehenden Ansprüche, bei dem der Anschluss (54, CN2) einen Verbinder (CN2) enthält, der über Stromversorgungsanschlüsse verfügt.

9. Elektronisches Fahrradgerät (1) nach einem der vorhergehenden Ansprüche, bei dem die weitere Steuereinheit (53) und der Anschluss (54, CN2) Teil einer Schnittstelleneinheit (50, 150) sind, die in dem elektronischen Fahrradgerät (1) lösbar abschließbar (CN1, CN1') ist.

10. Elektronisches Fahrradgerät (1) nach Anspruch 9, bei dem die Schnittstelleneinheit (50) weiterhin eine Stromversorgungsvorrichtung (55) für ihre Bauteile (53, 54) und/oder den Verbinder (CN2) enthält.

11. Elektronisches Fahrradgerät (1) nach Anspruch 10, bei dem die Stromversorgungsvorrichtung (55) einen EIN-IAUS-Schalter (60) enthält.

12. Elektronisches Fahrradgerät (1) nach einem der Ansprüche 10 bis 11, bei dem die Schnittstelleneinheit (50) einen zweiten Verbinder (CN1) enthält, der lösbar mit einem passenden Verbinder (CN1') verbunden werden kann, wobei der passende Verbinder (CN1') mit einem Kommunikationskanal (10) des Gerätes (1) verbunden ist, wobei eine Isoliervorrichtung (52) zwischengeschaltet ist und die Isoliervorrichtung (52) von der Stromversorgungsvorrichtung (55) der Schnittstelleneinheit (50) angesteuert werden kann.

13. Elektronisches Fahrradgerät (1) nach Anspruch 12, bei dem die Isoliervorrichtung (52) eine Anzahl von Isolierschaltern (51a, 51b) enthält, deren Anzahl gleich der Anzahl von Kommunikationsleitungen in dem Kommunikationskanal (10) ist.

14. Elektronisches Fahrradgerät (1) nach einem der Ansprüche 12 bis 13, bei dem der passende Verbinder (CN1') in einem Gehäuse aufgenommen ist, das eine Anzeigeeinheit (8) des Gerätes (1) enthält.

15. Elektronisches Fahrradgerät (1) nach einem der Ansprüche 12 bis 13, bei dem der passende Verbinder (CN1') in einem Gehäuse aufgenommen ist, das eine Steuereinheit (4) einer Gangschaltung des Gerätes (1) enthält.

## Revendications

1. Appareil électronique pour bicyclette (1) comprenant au moins une mémoire de données non volatile (14 à 17), au moins un dispositif de commande (2, 4, 8, 11) destiné à accéder à ladite au moins une mémoire de données non volatile (14 à 17), un port (54, CN2) pour un dispositif de mémorisation de masse amovible (99), et **caractérisé en ce que** ledit appareil (1) comprend un dispositif de commande supplémentaire (53) destiné à gérer le transfert de données entre ledit au moins un dispositif de commande (2, 4, 8, 11) et ledit port (54, CN2).

2. Appareil électronique pour bicyclette (1) selon la revendication 1, dans lequel ledit port (54, CN2) est un port pour une mémoire flash (99).

3. Appareil électronique pour bicyclette (1) selon la revendication 2, dans lequel ledit port (54, CN2) est un port USB.

4. Appareil électronique pour bicyclette (1) selon la revendication 2, dans lequel ledit port est un port pour une carte mémoire.

5. Appareil électronique pour bicyclette (1) selon l'une quelconque des revendications précédentes, comprenant une mémoire tampon (13) associée audit dispositif de commande supplémentaire (53).

6. Appareil électronique pour bicyclette (1) selon l'une quelconque des revendications précédentes, dans lequel ledit au moins un dispositif de commande (2, 4, 8, 11) et ledit dispositif de commande supplémentaire (53) communiquent par l'intermédiaire d'un protocole de communication série asynchrone en semi-duplex.

7. Appareil électronique pour bicyclette (1) selon l'une quelconque des revendications précédentes, dans lequel ledit au moins un dispositif de commande (2, 4, 8, 11) et ledit dispositif de commande supplémentaire (53) communiquent par l'intermédiaire d'un canal de communication (10) comportant deux circuits d'acheminement de signaux.

8. Appareil électronique pour bicyclette (1) selon l'une quelconque des revendications précédentes, dans lequel ledit port (54, CN2) comprend un connecteur (CN2) comportant des bornes d'alimentation.

9. Appareil électronique pour bicyclette (1) selon l'une quelconque des revendications précédentes, dans lequel ledit dispositif de commande supplémentaire (53) et ledit port (54, CN2) font partie d'une unité d'interface (50, 150) pouvant être connectée de façon amovible (CN1, CN1' dans ledit appareil électronique pour bicyclette (1).

10. Appareil électronique pour bicyclette (1) selon la revendication 9, dans lequel l'unité d'interface (50) comprend en outre un dispositif d'alimentation (55) pour ses composants (53, 54) et/ou le connecteur (CN2).

11. Appareil électronique pour bicyclette (1) selon la revendication 10, dans lequel le dispositif d'alimentation (55) comprend un commutateur MARCHE/ARRET (60).

12. Appareil électronique pour bicyclette (1) selon l'une quelconque des revendications 10 à 11, dans lequel ladite unité d'interface (50) comprend un deuxième connecteur (cul) pouvant être couplé de façon amovible à un connecteur correspondant (CN1'), ledit connecteur correspondant (CN1') étant connecté à un canal de communication (10) dudit appareil (1) avec le positionnement intermédiaire d'un dispositif d'isolement (52), ledit dispositif d'isolement (52) pouvant être commande par ledit dispositif d'alimentation (55) de l'unité d'interface (50).

13. Appareil électronique pour bicyclette (1) selon la revendication 12, dans lequel ledit dispositif d'isolement (52) comprend un certain nombre de commutateurs d'isolement (51a, 51b) équivalent au nombre de lignes de communication du canal de communication (10).

14. Appareil électronique pour bicyclette (1) selon l'une quelconque des revendications 12 à 13, dans lequel ledit connecteur correspondant (CN2') est logé dans un boitier contenant une unité d'affichage (8) de l'appareil (1).

15. Appareil électronique pour bicyclette (1) selon l'une quelconque des revendications 12 à 13, dans lequel ledit connecteur correspondant (CN2') est logé dans un boîtier contenant une unité de commande (4) d'un mécanisme de changement de vitesse de l'appareil (1).
